# EUROPÄISCHE PATENTANMELDUNG

(11) **EP 1 209 448 A1**
(43) Veröffentlichungstag der Anmeldung: **29.05.2002**
(21) Anmeldenummer: 00811116.3
(22) Anmeldetag: 23.11.2000
(51) Int. Cl.: G01D 5/347

(54) **Optischer Winkel- oder Wegmessgeber**

(71) Anmelder: ABB RESEARCH LTD., 8050 Zürich (CH)
(72) Erfinder: Höbel, Matthias, 5210 Windisch (CH); Prête, Philippe, 5405 Baden-Dättwil (CH); Byatt, Anthony, 5313 Klingnau (CH)
(74) Vertreter: ABB Patent Attorneys

(57) **Zusammenfassung**

Der Messgeber (1) dient zur Bestimmung der gegenseitigen Lage einer Massverkörperung (3) und eines relativ zur Massverkörperung (3) in einer Richtung bewegbaren Abtastkopfes (2). Licht (41) wird von einer Lichtquelle (21) auf dem Abtastkopf (2) ausgesandt, an der Massverkörperung (3) reflektiert und von Detektoren (22.1, 22.2) auf dem Abtastkopf (2) detektiert. Die Reflexion an der Massverkörperung (3) erfolgt derart, dass zumindest für einen spektralen Anteil des ausgesandten Lichtes (41) die Intensität des reflektierten Lichtes (42.1, 42.2) von der gegenseitigen Lage der Massverkörperung (3) und des Abtastkopfes (2) abhängt. Die von den Detektoren (22.1, 22.2) detektierte Lichtintensität ist also ein Mass für die gegenseitige Lage der Massverkörperung (3) und des Abtastkopfes (2). Die Massverkörperung (3) weist z. B. eine Fläche (31) auf, deren Farbe entlang der Bewegungsrichtung von Rot zu Weiss übergeht. Wird Weisslicht an der Fläche (31) reflektiert, so hängt das Verhältnis der beiden Farbkomponenten Grün und Rot von der Lage ab. Jede dieser beiden Farbkomponenten wird von einem Detektor (22.1, 22.2) detektiert. Der Messgeber (1) arbeitet berührungslos, ist einfach und kostengünstig herstellbar und weist eine geringe Empfindlichkeit gegenüber Verschmutzungen auf. Er kann in bestehende Verbrauchszähler wie bspw. Strom- oder Wasserzähler integriert werden, um deren automatische Ablesung zu ermöglichen.

## Beschreibung

### TECHNISCHES GEBIET

Die Erfindung betrifft einen optischen Winkel- oder Wegmessgeber und ein Verfahren zur optischen Winkel- oder Wegmessung gemäss den Oberbegriffen der unabhängigen Patentansprüche. Sie kann bspw. in Verbrauchszählern wie Stromzählern, Wasserzählern, Kilometerzählern in Fahrzeugen etc. eingesetzt werden.

### STAND DER TECHNIK

Viele Verbrauchszähler, z. B. Stromzähler oder Wasserzähler, sind heute aus Gründen der Zuverlässigkeit, der Sicherheit, aber auch aus historischen Gründen immer noch als mechanische Zähler ausgebildet. Ihre Auslesung geschieht heute vielfach noch mittels visueller Ablesung eines Angestellten der Abrechnungsfirma in den Wohnungen der Kunden selbst. Diese Arbeit ist zeitintensiv und umständlich, da der Zugang zu den einzelnen Wohnungen vor jedem Ablesen sichergestellt sein muss. Als Folge werden die Ableseintervalle meist sehr lang, was eine kosteneffiziente (z. B. monatliche) Abrechnung verunmöglicht. Um die Information eines solchen Zählers für die elektronische Datenverarbeitung nutzbar zu machen, z. B. zur Fernablesung, ist eine Vorrichtung bzw. ein Verfahren erforderlich, mit welchem der Zählerstand ermittelt und als elektrisches Ausgangssignal ausgelesen werden kann, ohne die Funktion des Zählers zu behindern.

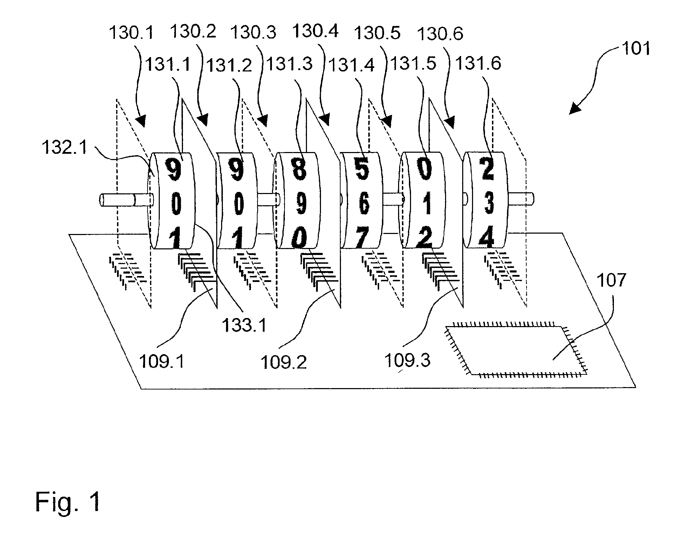

In einigen Märkten sind Geräte im Einsatz, bei denen der Zählerstand elektronisch über Kabel und ein spezielles Auslesegerät von ausserhalb der Wohnung abgelesen werden kann. Zu diesem Zweck muss die Zählerstandinformation zuerst einmal entkodiert und in ein elektrisches Signal umgewandelt werden. **Figur 1** zeigt einen Entkoder 101 gemäss Stand der Technik. Dieser Entkoder 101 ist mit zylindrischen Zählerrädchen 130.1-130.6 ausgestattet, deren Mantelflächen 131.1-131.6 nach wie vor mit Ziffern 0 bis 9 zur visuellen Ablesung bezeichnet sind. Die Stirnseiten 132.1-132.6, 133.1-133.6 der Zählerrädchen 130.1-130.6 weisen als Massverkörperungen geeignete (bspw. mit einem Gray-Code versehene) Leiterbahnen auf, welche von Schleifkontakten abgegriffen werden. Eine andere bekannte Ausführungsform funktioniert mit Lichtschranken, die axial durch eine geeignete Schlitzmaske auf dem Zählerrädchen die Position des Zählerrädchens erfassen. Eine elektronische Auswerteeinheit 107 wertet die Signale aus. Beide Ausführungsformen haben den Nachteil, dass zwischen den einzelnen Zählerrädchen 130.1-130.6 eine Vorrichtung 109, bspw. eine gedruckte Schaltung (printed circuit board, PCB) zur Befestigung der Schleifkontakte bzw. von Lichtquelle und Lichtempfänger vorhanden sein muss. Dies macht den Entkoder 101 aufwendig und teuer. Bei den Schleifkontakten kommt hinzu, dass im jahrelangen Betrieb Abnutzungserscheinungen auftreten; kontaktlose Lösungen wären vorzuziehen, um die Langzeitstabilität zu erhöhen.

Die Schrift FR-2 740 216 offenbart einen kontaktlos messenden Drehgeber. Er umfasst eine drehbare Scheibe, deren Lichttransmission in axialer Richtung von der Winkellage abhängig ist. Die Scheibe ist bspw. in zehn Kreissektoren unterteilt, deren Lichttransmission in Stufen von 10 % von 0 % auf 90 % zunimmt. Die Scheibe wird in axialer Richtung durchleuchtet, und die transmittierte Lichtintensität wird detektiert. Die detektierte Lichtintensität ist also ein Mass für die Winkellage der Scheibe. Auch dieser Drehgeber hat den Nachteil, dass die Lichtquelle und die Lichtdetektoren seitlich neben der Scheibe bzw. zwischen zwei Scheiben angebracht sein müssen.

Eine andere Klasse bekannter Drehgeber vermeidet den Nachteil zwischen den Scheiben anzubringender Messköpfe, indem eine Massverkörperung auf der Mantelfläche der Scheibe (oder Trommel) angebracht wird. In der Schrift JP-11 051 702 A ist die Massverkörperung als sequentieller, binärer Code auf einer geschlossenen Bahn entlang einem Trommelumfang ausgebildet. Der Code wird auf einen Detektor abgebildet und von diesem erfasst. Die Auswertung eines solchen Codes ist aber aufwendig und teuer, so dass dieser Drehgeber für Low-Cost-Anwendungen wie Strom- oder Wasserzähler kaum geeignet ist.

Eine weitere Lösung wird in der Schrift JP-09 014 941 A vorgeschlagen. Demgemäss ist eine nicht-reflektierende Mantelfläche der Trommel von einem reflektierenden Band umwickelt, welches jedoch nicht geschlossen ist, so dass das Band die Form einer Schraubenlinie mit einer Windung aufweist und die Position des Bandes in axialer Richtung von der Winkellage der Trommel abhängt. Die Trommel wird von einer Richtung her entlang ihrer gesamten Länge beleuchtet; der beleuchtete Teil der Trommel wird auf einen eindimensionalen Positionsdetektor abgebildet. Die vom Positionsdetektor ermittelte axiale Position des Bandes ist ein Mass für die Winkellage der Trommel. Dieser Drehgeber hat einige Nachteile. Er ist anfällig ist auf Verschmutzungen der Mantelfläche. Der Positionsdetektor ist eine relativ teure, störungsanfällige Komponente. Die Lichtausbeute ist schlecht, weil nur der vom schmalen Band reflektierte Lichtanteil auf den Detektor gelangt.

### DARSTELLUNG DER ERFINDUNG

Es ist Aufgabe der Erfindung, einen Winkel- oder Wegmessgeber zu schaffen und ein Verfahren zur optischen Winkel- oder Wegmessung anzugeben, welche die obigen Nachteile vermeiden. Insbesondere soll der Messgeber berührungslos arbeiten, einfach und kostengünstig herstellbar sein und eine geringe Empfindlichkeit gegenüber Verschmutzungen aufweisen. Als Drehgeber ausgeführt, soll er radial messen. Die Aufgabe wird gelöst durch den Messgeber und das Verfahren, wie sie in den unabhängigen Patentansprüchen definiert sind.

Zur präzisen Beschreibung der Erfindung werden nachfolgend zwei häufig verwendete Begriffe für die gesamte vorliegende Schrift definiert.
- "Licht":
   Unter "Licht" wird in dieser Schrift sichtbares Licht (VIS), aber auch andere elektromagnetische Strahlung mit ähnlichen Eigenschaften, insbesondere infrarote (IR) oder ultraviolette (UV) Strahlung, verstanden.
- "Bewegungsrichtung":
   Wie eingangs erwähnt, dient die Erfindung der Bestimmung der gegenseitigen Lage einer Massverkörperung und eines relativ zur Massverkörperung in einer Richtung bewegbaren Abtastkopfes. Es muss nun zwischen Weg- und Winkelmessgeber unterschieden werden. Bei einem Wegmessgeber wird die Massverkörperung gegenüber dem Abtastkopf linear verschoben; in diesem Fall ist die Bewegungsrichtung trivialerweise die Richtung (vorwärts oder rückwärts) dieser linearen Translation. Bei einem Winkelmessgeber wird die Massverkörperung in Form einer Scheibe, Rolle oder Trommel gegenüber dem Abtastkopf gedreht; in diesem Fall wird unter "Bewegungsrichtung" die Richtung (vorwärts oder rückwärts) eines momentanen Geschwindigkeitsvektors eines Punktes der Massverkörperung im Bereich des Abtastkopfes verstanden.

Die Erfindung beruht auf der Idee, Licht vom Abtastkopf auszusenden, zumindest einen spektralen Anteil des Lichtes an der Massverkörperung zu reflektieren und auf dem Abtastkopf zu detektieren. Dabei wird der zumindest eine spektrale Lichtanteil derart an der Massverkörperung reflektiert, dass die Intensität des reflektierten Lichtes von der gegenseitigen Lage der Massverkörperung und des Abtastkopfes abhängt. Die Intensität des reflektierten und detektierten Lichtes ist also ein Mass für die gegenseitige Lage der Massverkörperung und des Abtastkopfes.

Beim erfindungsgemässen Messgeber zur Bestimmung der gegenseitigen Lage einer Massverkörperung und eines relativ zur Massverkörperung in einer Richtung bewegbaren Abtastkopfes ist also die Massverkörperung zumindest teilweise reflektierend ausgebildet. Der Abtastkopf beinhaltet Mittel zum Aussenden von Licht zur Massverkörperung hin und Mittel zur Detektion von an der Massverkörperung reflektiertem Licht. Die Massverkörperung ist derart ausgebildet, dass zumindest ein spektraler Anteil des ausgesandten Lichtes derart an der Massverkörperung reflektiert wird, dass die Intensität des reflektierten Lichtes von der gegenseitigen Lage der Massverkörperung und des Abtastkopfes abhängt.

Gemäss dem erfindungsgemässen Verfahren zur Bestimmung der gegenseitigen Lage einer Massverkörperung und eines relativ zur Massverkörperung in einer Richtung bewegbaren Abtastkopfes wird Licht vom Abtastkopf ausgesandt, an der Massverkörperung reflektiert und auf dem Abtastkopf detektiert. Zumindest ein spektraler Anteil des ausgesandten Lichtes wird derart an der Massverkörperung reflektiert, dass die Intensität des reflektierten Lichtes von der gegenseitigen Lage der Massverkörperung und des Abtastkopfes abhängt.

In einer einfachen Ausführungsform der Erfindung beinhaltet die Massverkörperung eine Fläche, deren Reflektivität für einen breiten Spektralbereich, z. B. für sichtbares Licht, stetig oder stufenweise von einem niedrigen Wert, bspw. 0, auf einen hohen Wert, bspw. 1, entlang der Bewegungsrichtung monoton zunimmt. In diesem Fall kann zum Aussenden von Licht eine Weisslichtquelle oder auch eine quasimonochromatische Lichtquelle, bspw. eine Leuchtdiode (LED), verwendet werden. Zur Detektion des reflektierten Lichtes genügt ein einziger im verwendeten Spektralbereich empfindliche Intensitätsdetektor, bspw. eine Silizium-Photodiode.

In einer bevorzugten Ausführungsform beinhaltet der Abtastkopf eine Lichtquelle und zwei Intensitätsdetektoren, welche auf einer Geraden senkrecht zur Bewegungsrichtung angeordnet sind, vorzugsweise derart, dass die Lichtquelle zwischen den beiden Detektoren liegt. Ausgangssignale der Lichtdetektoren werden ausgewertet, indem eine Differenz oder ein Quotient der Ausgangssignale gebildet wird; so wird das Ausgangssignal des Messgebers weitgehend unabhängig von Intensitätsschwankungen der Lichtquelle, von Verschmutzungen der Massverkörperung etc. Bei dieser Messmethode können nun die folgenden zwei Varianten unterschieden werden:
(a) Die Massverkörperung beinhaltet eine Fläche, deren Reflektivitäten in zwei verschiedenen Spektralbereichen entlang der Bewegungsrichtung unterschiedliche Verhalten aufweisen. Als Beispiel sei eine Fläche betrachtet, deren Reflektivität in einem ersten Spektralbereich stetig oder stufenweise von einem niedrigen Wert, bspw. 0, auf einen hohen Wert, bspw. 1, entlang der Bewegungsrichtung monoton zunimmt, hingegen in einem zweiten, vom ersten verschiedenen Spektralbereich im wesentlichen konstant ist. Die Fläche kann z. B. derart beschichtet sein, dass ihre Farbe von einer Spektralfarbe, hier Rot (an einem ersten Ende des Messbereichs) zu Weiss (am zweiten Ende des Messbereichs) übergeht. Mit anderen Worten: Die Fläche absorbiert am ersten Ende die Komplementärfarbe, nämlich grünes sichtbares Licht, und der Absorptionsgrad nimmt zum zweiten Ende hin ab. Da nach dem Kirchhoffschen Gesetz die Summe aus absorbierten, reflektierten und transmittierten Anteilen 100 % ergibt, ändert sich im reflektierten Anteil das Verhältnis der beiden Farbkomponenten Grün und Rot. Die reflektierte Intensität der grünen Komponente ändert sich je nach Lage, während die reflektierte Intensität der roten Komponente im wesentlichen unabhängig von der Lage ist. Bei dieser Variante muss das verwendete Licht zumindest einen ersten Anteil im ersten Spektralbereich und zumindest einen zweiten Anteil im zweiten Spektralbereich aufweisen. Die verwendete Lichtquelle kann mehrere Emissionslinien aufweisen oder Weisslicht aussenden; es können auch mindestens zwei in verschiedenen Spektralbereichen emittierende Lichtquellen verwendet werden. Ein erster Detektor ist vorzugsweise im ersten Spektralbereich empfindlich und im zweiten Spektralbereich unempfindlich sein, ein zweiter Detektor im zweiten Spektralbereich empfindlich und im ersten Spektralbereich unempfindlich; dies kann auch mit identischen breitbandigen Detektoren erreicht werden, denen je ein entsprechendes Filter vorgeschaltet ist.
(b) Die Massverkörperung beinhaltet zwei Flächen, deren Reflektivitäten in einem Spektralbereich entlang der Bewegungsrichtung unterschiedliche Verhalten aufweisen. Als Beispiel sei eine erste Fläche betrachtet, deren Reflektivität für sichtbares Licht stetig oder stufenweise von einem niedrigen Wert, bspw. 0, auf einen hohen Wert, bspw. 1, entlang der Bewegungsrichtung monoton zunimmt, und eine zweite Fläche mit einer dazu komplementären Reflektivität, welche für sichtbares Licht stetig oder stufenweise von einem hohen Wert, bspw. 1, auf einen niedrigen Wert, bspw. 0, entlang der Bewegungsrichtung monoton abnimmt. Diese Variante hat den Vorteil, dass eine einzige Weisslichtquelle und zwei Intensitätsdetektoren ohne besondere Anforderungen an die spektrale Empfindlichkeit (bzw. Farbfilter) verwendet werden können. Der Vorteil muss durch ein aufwendigeres Herstellungsverfahren für die Massverkörperung (zwei verschiedene Flächen) erkauft werden.

### KURZE BESCHREIBUNG DER ZEICHNUNGEN

- Fig. 1: zeigt einen automatisch ablesbaren Verbrauchszähler gemäss Stand der Technik.
- Fig. 2: zeigt eine erste Ausführungsform des erfindungsgemässen Messgebers.
- Fig. 3: zeigt (a) Reflektivitäten und (b) ein Ausgangssignal der Ausführungsform von Fig. 2, in Abhängigkeit von der Position.
- Fig. 4: zeigt eine zweite Ausführungsformen des erfindungsgemässen Messgebers.
- Fig. 5: zeigt (a) Reflektivitäten und (b) ein Ausgangssignal der Ausführungsform von Fig. 4, in Abhängigkeit von der Position.

### WEGE ZUR AUSFÜHRUNG DER ERFINDUNG

Im folgenden werden zwei bevorzugte Ausführungsformen der Erfindung anhand der Zeichnungen detailliert beschrieben. Diese zwei Ausführungsformen betreffen Winkelmessgeber; die Erfindung bezieht sich auch auf Wegmessgeber, deren Aufbau und Funktionsweise analog zu den beschriebenen Winkelmessgebern sein kann.

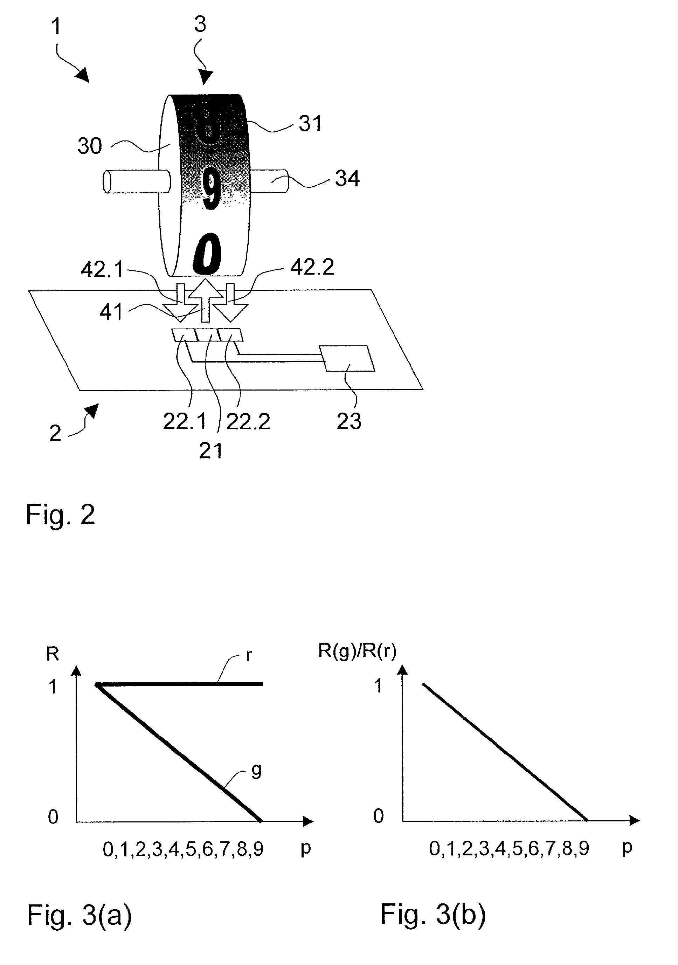

**Figur 2** zeigt schematisch eine erste Ausführungsform eines erfindungsgemässen Winkelmessgebers 1. Der Messgeber 1 beinhaltet einen Abtastkopf 2 und eine Massverkörperung 3, welche relativ zueinander bewegbar sind. In diesem Ausführungsbeispiel eines Winkelmessgebers ist die Massverkörperung 3 als Zählerrolle 30 mit einer (teilweise) reflektierenden Mantelfläche 31 ausgebildet. Die Zählerrolle 30 ist um eine Achse 34 drehbar, wogegen der Abtastkopf 2 vorzugsweise unbeweglich ist. Der Abtastkopf 2 ist mit einer Lichtquelle 21 und zwei Lichtdetektoren 22.1, 22.2 versehen. Die Lichtquelle 21 kann bspw. eine Weisslichtquelle oder eine Multicolor-Leuchtdiode (LED) sein. Die Lichtdetektoren 22.1, 22.2 können als die einfallende Lichtintensität messende Silizium-Fotodioden ausgebildet sein. Die Lichtquelle 21 sendet Licht 41 gegen die Massverkörperung 3 hin aus. Das ausgesandte Licht 41 wird an der Fläche 31 der Massverkörperung 3 derart reflektiert, dass es teilweise auf den ersten Detektor 22.1 und teilweise auf den zweiten Detektor 22.2 fällt, was mit Pfeilen 42.1 bzw. 42.2 angedeutet ist.

Erfindungsgemäss ist nun die Fläche 31 derart ausgebildet, dass ihre Reflektivitäten in zwei verschiedenen Spektralbereichen entlang des Umfangs der Zählerrolle 30 unterschiedliche Verhalten aufweisen. Vorzugsweise handelt es sich dabei um komplementäre Spektralbereiche, deren spektrale Mischung weisses Licht ergeben. Die Fläche 31 ist z. B. derart beschichtet, dass ihre Farbe entlang des Rollenumfangs von Weiss zu Rot übergeht. An einer Stelle der Fläche 31 kann somit eine (nicht dargestellte) Diskontinuität in der Farbe der Fläche 31 entstehen, in diesem Beispiel eine Trennlinie, auf deren einen Seite die Fläche 31 rot und auf deren anderen Seite die Fläche 31 weiss ist.

Die Fläche 31 absorbiert also in ihrem roten Bereich grünes sichtbares Licht, und der Absorptionsgrad nimmt zum weissen Bereich hin ab. Da weisses Licht näherungsweise als Mischung von Grün und Rot aufgefasst werden kann und nach dem Kirchhoffschen Gesetz die Summe aus absorbierten, reflektierten und transmittierten Anteilen 100 % ergibt, ändert sich im reflektierten Anteil das Verhältnis der beiden Farbkomponenten Grün und Rot. Dies wird durch das Diagramm von **Figur 3(a)** illustriert, in welchem die Reflektivität R der Fläche 31 als Funktion der Position p auf dem Rollenumfang dargestellt ist. (Für die Bezeichnung der Position p können z. B. die Ziffern 0-9 verwendet werden, welche üblicherweise auf Zählerrollen 30 äquidistant angebracht sind.) Die reflektierte Intensität R(g) der grünen Komponente g ändert sich je nach Lage, während die reflektierte Intensität R(r) der roten Komponente r im wesentlichen unabhängig von der Lage ist. Das Diagramm von Figur 3(b) zeigt das Verhältnis R(g)/R(r) der Reflektivitäten für grünes und rotes Licht, welches mit der Position p monoton abnimmt. Das Verhältnis R(g)/R(r) kann bspw. in Mitteln 23 (Fig. 2) zur Auswertung der Ausgangssignale R(g), R(r) der beiden Detektoren 22.1, 22.2 berechnet werden.

Bei dieser ersten Variante muss das verwendete Licht 41 zumindest einen ersten Anteil im ersten Spektralbereich, d. h. Grün, und zumindest einen zweiten Anteil im zweiten Spektralbereich, d. h. Rot, aufweisen. Die verwendete Lichtquelle 21 (Fig. 2) kann mehrere Emissionslinien aufweisen oder Weisslicht aussenden; es können auch mindestens zwei in verschiedenen Spektralbereichen emittierende Lichtquellen verwendet werden. Ein erster Detektor 22.1 ist vorzugsweise im ersten Spektralbereich (Grün) empfindlich und im zweiten Spektralbereich (Rot) unempfindlich, ein zweiter Detektor 22.2 im zweiten Spektralbereich empfindlich und im ersten Spektralbereich unempfindlich; dies kann auch mit identischen breitbandigen Detektoren erreicht werden, denen je ein entsprechendes Farbfilter vorgeschaltet ist.

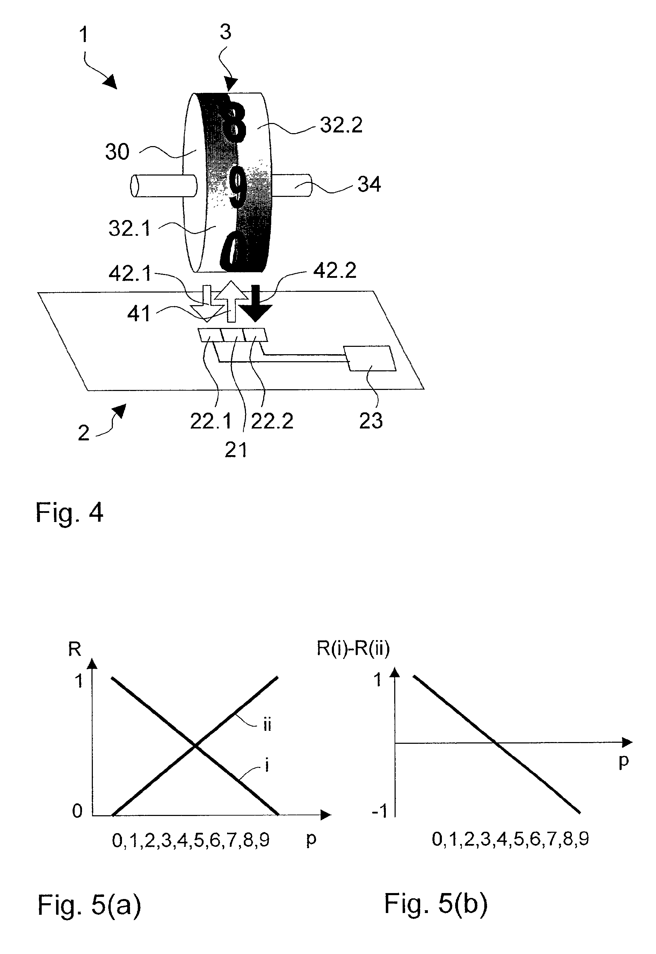

**Figur 4** zeigt schematisch eine zweite Ausführungsform eines erfindungsgemässen Winkelmessgebers 1. Auch dieser Messgeber 1 beinhaltet einen Abtastkopf 2 und eine Massverkörperung 3, welche relativ zueinander bewegbar sind. Der Abtastkopf 2 ist mit einer Lichtquelle 21 und zwei Lichtdetektoren 22.1, 22.2 versehen.

Die Massverkörperung 3 beinhaltet in diesem zweiten Ausführungsbeispiel zwei Flächen 32.1 und 32.2, deren Reflektivitäten für sichtbares Licht entlang der Bewegungsrichtung unterschiedliche Verhalten aufweisen. Eine erste Fläche 32.1 geht bspw. von Weiss (Reflektivität 1) kontinuierlich über Grautöne in Schwarz (Reflektivität 0) über, und eine zweite Fläche 32.2 ist dazu komplementär, d. h. geht von Schwarz zu Weiss über. In dieser Ausführungsform können eine Weisslichtquelle 21 und zwei der ersten Fläche 32.1 bzw. zweiten Fläche 32.2 zugeordnete Intensitätsdetektoren 22.1 bzw. 22.2 ohne besondere Anforderungen an die spektrale Empfindlichkeit (bzw. ohne Farbfilter) verwendet werden.

Die Diagramme von **Figur 5** illustrieren das Verfahren zur Signalauswertung bei der zweiten Ausführungsform von Fig. 4. **Figur 5(a)** zeigt die Reflektivitäten (i) der ersten Fläche 32.1 und (ii) der zweiten Fläche 32.2 als Funktionen der Position p. Die von der ersten Fläche 32.1 reflektierte, vom ersten Detektor 22.1 detektierte Lichtintensität nimmt ab, während die von der zweiten Fläche 32.2 reflektierte, vom zweiten Detektor 22.2 detektierte Lichtintensität zunimmt. Die Signaldifferenz R(i)-R(ii) ist ein direktes Mass für die Winkellage p der Massverkörperung 3, wie **Figur 5(b)** zeigt. Sie kann bspw. in Mitteln 23 (Fig. 4) zur Auswertung der Ausgangssignale R(i), R(ii) der beiden Detektoren 22.1, 22.2 berechnet werden.

### BEZUGSZEICHENLISTE

- 1: Winkel- oder Wegmessgeber

- 2: Abtastkopf
- 21: Lichtquelle
- 22: Detektor
- 23: Auswertmittel

- 3: Massverkörperung
- 30: Zählerrolle
- 31, 32: Flächen der Massverkörperung
- 34: Achse der Massverkörperung

- 41: ausgesandter Lichtstrahl
- 42: reflektierter Lichtstrahl

- 101: Entkoder gem. Stand der Technik
- 130: Zählerrädchen
- 131: Mantelfläche
- 132, 133: Stirnflächen
- 107: Auswerteeinheit
- 108: gedruckte Schaltung

- g: Grün
- p: Position auf Rollenumfang
- R: Reflektivität
- r: Rot

## Patentansprüche

1. Messgeber (1) zur Bestimmung der gegenseitigen Lage (p) einer Massverkörperung (3) und eines relativ zur Massverkörperung (3) in einer Richtung bewegbaren Abtastkopfes (2), wobei
die Massverkörperung (3) zumindest teilweise reflektierend ausgebildet ist und
der Abtastkopf (2) Mittel (21) zum Aussenden von Licht (41) zur Massverkörperung (3) hin und Mittel (22) zur Detektion von an der Massverkörperung (3) reflektiertem Licht (42) beinhaltet,
**dadurch gekennzeichnet,**
**dass** die Massverkörperung (3) derart ausgebildet ist, dass zumindest ein spektraler Anteil des ausgesandten Lichtes (41) derart an der Massverkörperung (3) reflektiert wird, dass die Intensität des reflektierten Lichtes (42.1, 42.2) von der gegenseitigen Lage (p) der Massverkörperung (3) und des Abtastkopfes (2) abhängt.

2. Messgeber (1) nach Anspruch 1, wobei die Massverkörperung (3) eine Fläche (31) beinhaltet, deren Reflektivität (R) für einen Spektralbereich (g) stetig oder stufenweise von einem niedrigen Wert auf einen hohen Wert entlang der Bewegungsrichtung monoton zunimmt.

3. Messgeber (1) nach Anspruch 1 oder 2, wobei
die Sendemittel (21) zum Aussenden von Licht (41) mit zumindest einen ersten Lichtanteil in einem ersten Spektralbereich (g) und zumindest einen zweiten Lichtanteil in einem zweiten, vom ersten verschiedenen Spektralbereich (r) ausgebildet sind,
die Massverkörperung (3) eine Fläche (31) mit definierten Reflektivitäten (R(g), R(r)) im ersten und zweiten Spektralbereich (g, r) beinhaltet, welche Reflektivitäten (R(g), R(r)) entlang der Bewegungsrichtung unterschiedliche Verhalten aufweisen,
die Detektionsmittel (22.1, 22.2) zur separaten Detektion von Licht (42.1, 42.2) im ersten bzw. im zweiten Spektralbereich (g, r) ausgebildet sind, und
der Abtastkopf (2) Mittel (23) zur Auswertung von Ausgangssignalen der Detektionsmittel (22.1, 22.2) beinhaltet, mittels welcher eine Differenz oder ein Quotient der Ausgangssignale für den ersten bzw. den zweiten Spektralbereich (g, r) bildbar ist.

4. Messgeber (1) nach Anspruch 3, wobei die Reflektivität der Fläche (31) im ersten Spektralbereich (g) stetig oder stufenweise von einem niedrigen Wert auf einen hohen Wert entlang der Bewegungsrichtung monoton zunimmt, hingegen im zweiten Spektralbereich (r) im wesentlichen konstant ist.

5. Messgeber (1) nach Anspruch 4, wobei die Farbe der Fläche (31) entlang der Bewegungsrichtung von Rot zu Weiss übergeht.

6. Messgeber (1) nach Anspruch 1 oder 2, wobei
die Massverkörperung (3) eine erste Fläche (32.1) und eine zweite Fläche (32.2) beinhaltet, deren Reflektivitäten (R(i), R(ii)) in einem Spektralbereich entlang der Bewegungsrichtung unterschiedliche Verhalten aufweisen,
die Detektionsmittel (22.1, 22.2) zur separaten Detektion von von der ersten bzw. der zweiten Fläche (32.1, 32.2) reflektierten Lichtanteilen (42.1, 42.2) ausgebildet sind, und
der Abtastkopf (2) Mittel (23) zur Auswertung von Ausgangssignalen der Detektionsmittel (22.1, 22.2) beinhaltet, mittels welcher eine Differenz oder ein Quotient der Ausgangssignale für von der ersten bzw. der zweiten Fläche (32.1, 32.2) reflektierte Lichtanteile (42.1, 42.2) bildbar ist.

7. Messgeber (1) nach Anspruch 6, wobei die Reflektivität (R(i)) der ersten Fläche (32.1) stetig oder stufenweise von einem niedrigen Wert auf einen hohen Wert entlang der Bewegungsrichtung monoton zunimmt, und die Reflektivität (R(ii)) der zweiten Fläche (33) ein dazu komplementäres Verhalten aufweist.

8. Messgeber (1) nach einem der Ansprüche 3-7, wobei der Abtastkopf (2) eine Lichtquelle (21) und zwei Lichtdetektoren (22.1, 22.2) beinhaltet, welche auf einer Geraden senkrecht zur Bewegungsrichtung angeordnet sind, derart, dass die Lichtquelle (21) zwischen den beiden Lichtdetektoren (22.1, 22.2) liegt.

9. Messgeber (1) nach einem der vorangehenden Ansprüche, wobei die Sendemittel (21) als Weisslichtquelle oder als Leuchtdiode und die Detektionsmittel (22.1, 22.2) als Fotodioden ausgebildet sind.

10. Messgeber (1) nach einem der vorangehenden Ansprüche, wobei die Massverkörperung (3) kreisringförmig geformt ist.

11. Verfahren zur Bestimmung der gegenseitigen Lage (p) einer Massverkörperung (3) und eines relativ zur Massverkörperung (3) in einer Richtung bewegbaren Abtastkopfes (2), wobei
Licht (41) vom Abtastkopf (2) ausgesandt, an der Massverkörperung (3) reflektiert und auf dem Abtastkopf (2) detektiert wird,
**dadurch gekennzeichnet,**
**dass** zumindest ein spektraler Anteil des ausgesandten Lichtes (41) derart an der Massverkörperung (3) reflektiert wird, dass die Intensität des reflektierten Lichtes (42.1, 42.2) von der gegenseitigen Lage (p) der Massverkörperung (3) und des Abtastkopfes (2) abhängt.

12. Verfahren nach Anspruch 11, wobei
Licht (41) mit zumindest einen ersten Lichtanteil in einem ersten Spektralbereich (g) und zumindest einen zweiten Lichtanteil in einem zweiten, vom ersten verschiedenen Spektralbereich (r) ausgesandt wird,
Licht (41) derart an der Massverkörperung (3) reflektiert wird, dass die Reflektivitäten (R(g), R(r)) für den ersten und den zweiten Spektralbereich (g, r) entlang der Bewegungsrichtung unterschiedliche Verhalten aufweisen,
Licht (42.1, 42.2) im ersten bzw. im zweiten Spektralbereich (g, r) von Detektionsmitteln (22.1, 22.2) separat detektiert wird, und
eine Differenz oder ein Quotient der Ausgangssignale der Detektionsmittel (22.1, 22.2) für den ersten bzw. den zweiten Spektralbereich (g, r) gebildet wird.

13. Verfahren nach Anspruch 11, wobei
Licht (41) derart an einer ersten Fläche (32.1) und an einer zweiten Fläche (32.2) der Massverkörperung (3) reflektiert wird, dass die Reflektivitäten (R(i), R(ii)) der beiden Flächen (32.1, 32.2) in einem Spektralbereich entlang der Bewegungsrichtung unterschiedliche Verhalten aufweisen,
von der ersten bzw. der zweiten Fläche (32.1, 32.2) reflektierte Lichtanteile (42.1, 42.2) von Detektionsmitteln (22.1, 22.2) separat detektiert werden, und
eine Differenz oder ein Quotient der Ausgangssignale der Detektionsmittel (22.1, 22.2) für von der ersten bzw. der zweiten Fläche (32.1, 32.2) reflektierte Lichtanteile (42.1, 42.2) gebildet wird.

14. Verwendung des Messgebers (1) nach einem der Ansprüche 1-10 für die automatische Auslesung von Verbrauchszählern wie bspw. Stromzählern, Wasserzählern oder Kilometerzählern in Fahrzeugen.
